# EUROPEAN PATENT SPECIFICATION

(11) **EP 4 046 970 B1**
(45) Date of publication and mention of the grant of the patent: **26.03.2025**
(21) Application number: 22156730.8
(22) Date of filing: 15.02.2022
(51) Int. Cl.: C02F 11/14, C02F 11/143, C02F 11/145, C05F 7/00, C05G 3/80, C05G 5/12, C02F 9/00, C02F 11/06

(54) **PROCESS FOR TREATING RESIDUAL BIOLOGICAL SLUDGE FOR THE PRODUCTION OF GRANULAR FERTILIZER**
VERFAHREN ZUR BEHANDLUNG VON BIOLOGISCHEM RESTSCHLAMM FÜR DIE HERSTELLUNG VON KÖRNIGEM DÜNGEMITTEL
PROCÉDÉ DE TRAITEMENT DES BOUES BIOLOGIQUES RÉSIDUELLES POUR LA PRODUCTION D'ENGRAIS GRANULÉS

(30) Priority: 18.02.2021 IT 202100003791
(43) Date of publication of application: 24.08.2022
(73) Proprietor: Agrosistemi S.r.l., 29122 Piacenza (PC) (IT)
(72) Inventor: CELLA, Fabio, 29122 Piacenza (IT)
(74) Representative: Raimondi, Margherita

(56) References cited:
- WO-A1-2018/022734
- IT-A1- 201800 010 682
- IT-A1- PC20 110 014
- US-A1- 2010 139 346

## Description

The present invention relates to a process for the production of corrective fertilizers for alkaline and/or saline agricultural soils, obtained from a biological sludge.

The starting biological sludge may consist of or comprise biological materials associated with the civil and/or industrial wastewater purification cycles or other residual organic materials such as, for example, the organic fraction of urban solid waste (OFUSW), the digestates from methanogenic fermentation, waste of animal origin or residual biological materials in general.

It is known, in the technical sector of sanitary engineering, that civil and/or industrial wastewaters cannot be re-introduced into the environment as such, since the final destinations such as the earth, the sea, the rivers and the lakes are unable to assimilate a quantity of polluting substances greater than their own self-purifying capacity. For this reason, wastewaters are subjected to a process for removal of the contaminants, which is commonly referred to as wastewater purification and is performed in purification plants also known as wastewater purifiers.

The purification treatment consists in a succession of several steps during which, the undesirable substances are removed from the wastewater and are concentrated in the form of biological sludge separated from a final liquid effluent so as to be compatible with the self-purifying capacity of the prechosen waste receiving body.

The biological sludge, which is digested anaerobically or aerobically, is usually dehydrated in order to reduce the moisture thereof by means of mechanical dehydration performed with a centrifuge or filter press.

The dehydrated residual biological sludge therefore has a semi-solid consistency which does not allow easy management thereof.

Basically, the composition of a dehydrated residual sludge is on average formed by 15% to 40% by weight, in particular 20-25% of dry fraction and 60-85%, in particular 80-75%, of water.

The table below shows the average values of the groups of substances which form the only dry fraction of a typical residual sludge and of an analysed sample of a civil wastewater purification process:

| **Average composition of a purification sludge of civil wastewater** | **Typical range (grammes)** | **Sample (grammes)** |
|---|---|---|
| **Dry sludge** | | 1000 |
| Ash | 310-400 | 340 |
| Proteins (N=3.5%) | 200-230 | 219 |
| Carbohydrates | 265-295 | 281 |
| Lipids | 40-70 | 60 |
| Fibres | 80-120 | 100 |

It is also known that the residual biological purification sludge extracted at the end of the civil and/or industrial wastewater purification process (digestate or non-digestate), the biological purification sludge extracted from the sludge line, before the conditioning and/or dehydration treatments (digestate and non-digestate), but also other biological materials such as the organic fraction of urban solid waste (OFUSW), waste of animal origin, the digestates from methanogenic fermentation, and the residual biological materials originating from zootechnical activities in general, if taken as such, are generally regarded as waste and may not be freely recycled or reused, for example on agricultural soils, without having been first suitably treated. The disposal of this biological sludge is therefore a problem which is burdensome in financial terms and complex from an ecological point of view.

In order to solve the problem of recovery and/or reuse, various treatment methods designed to convert biological sludge into fertilizers have been developed; this sludge, if suitably treated, may in fact be particularly useful for soil conditioning and plant nutrition since, in addition to the organic substance, these materials also contain considerable amounts of nitrogen, phosphorus, potassium, calcium and sulphur and, obviously, organic substance.

In detail, the total nitrogen present in these biological materials ranges on average between 1% and 6%, in relation to the dry substance, and the organic substance constitutes on average between 50% and 70% of the dry mass.

However, while having characteristics which are particularly useful for agriculture, said materials have at the same time certain negative characteristics which limit their widespread use:
- ) High moisture content: The said materials have moisture percentage levels higher than 60% and often higher than 80%. This means that, in order to use them on soils, large masses must be displaced, making the management thereof uneconomical and favouring the use of mineral fertilizers in the dry state, even though the latter do not provide any organic substance.

Moreover, it often happens that, in order to economize the management process, the producers of organic materials (for example livestock rearing activities), tend to use them over small agricultural areas, resulting in negative consequences for the environment, such as the pollution of groundwater layers and the eutrophication of the seas. This occurs because of the use of excessive quantities of nitrogen and phosphorus per unit of surface area.
- ) Strong smell. The lack of chemical, biological or thermal treatment allows anaerobiosis to occur, resulting in the emission of molecules such as mercaptans, amines and hydrogen sulphide. The characteristic smell of these compounds makes handling, storage and in particular agricultural use difficult. In fact, these operations are commonly carried out using equipment which spreads the material, throwing it out so as to cover an agricultural surface area which is as large as possible. This inevitably results in the formation of aerosol and the spread of unpleasant odours.
- ) Potential presence of pathogenic bacteria. The biological sludge may have a very high microbial content and potentially pathogenic bacteria may be present. For safe distribution and use it is important that these materials should undergo sanitization treatments.

WO 2018/022734 A1 discloses a process for treating a starting biological sludge where the sludge is first mixed with calcium oxide and subsequently mixed with sulphuric acid to produce a fertilizer. Further examples of process for producing a fertilizer from starting biological materials are disclosed in ITPC20110014 A1 and US 2010/139346 A1.

The technical problem which is posed, therefore, is that of providing a process for treating biological purification sludge or other residual organic materials such as, for example, the organic fraction of urban solid waste (OFUSW), methanogenic fermentation digestates and waste of animal origin, which is able to provide products which may be used as correctives for agricultural soils and which solves or at least overcomes one or more of the said problems of the prior art.

These results are obtained according to the present invention by a treatment process according to Claim 1

A treatment plant adapted to carry out the process according to the invention may comprise:
- at least one batch mixing reactor arranged and configured to receive at its input a quantity of starting biological sludge (MBRO) with a dry fraction greater than or equal to 15% by weight, and
- feeding means for feeding sulphuric acid, connected to the at least one batch mixing reactor and configured to feed a quantity of sulphuric acid to the at least one mixing reactor; wherein the at least one batch mixing reactor is configured to mix said quantity of starting biological sludge and said quantity of sulphuric acid so as to perform acid conditioning of the starting biological sludge resulting in a fluid acid sludge with a temperature higher than and viscosity less than the starting biological sludge;
- feeding means for feeding a hydrogen peroxide solution, connected to the at least one batch mixing reactor and configured to feed a hydrogen peroxide solution inside the mixing reactor following said acid conditioning, so that the mixing reactor mixes the fluid acid sludge with the hydrogen peroxide solution;
- extraction means configured to extract the fluid acid sludge from the at least one batch mixing reactor and feed it to a mixing system;
- said mixing system connected to means for feeding calcium oxide in powder form and configured to mix thoroughly the fluid acid sludge extracted from the at least one batch mixing reactor and the calcium oxide in powder form and to output an alkaline mixture comprising hydrolysed organic material and calcium sulphate;
- a rotary reactor with a reaction chamber extending between an upstream inlet for feeding the alkaline mixture and a downstream outlet, further comprising an upstream outlet for outputting gaseous substances;

the rotary reactor configured to be rotationally operated and comprising mixing means inside the reaction chamber so that, during rotation of the rotary reactor, the alkaline mixture is mixed and turned around and moves from the upstream opening to the downstream outlet inside the reaction chamber;
wherein the rotary reactor is also arranged and configured so that, during transit of the mixture from the upstream inlet to the downstream outlet, a temperature of the mixture inside the reaction chamber exceeds 90°C and the mixture is dehydrated with the production of steam and an increase of the percentage of dry substance of the mixture to more than 55%, providing at the downstream outlet a dried resulting material which is a granular fertilizer (MBR3) in the form of granules with a residual moisture less than or equal to 40%, preferably of between 10% and 30%, suitable for use as a corrective for alkaline and/or saline agricultural soils.

According to a preferred embodiment, the treatment plant is a plant for purification of civil and/or industrial wastewater, further comprising:
- one or more civil and/or industrial waste water inlet feeding ducts;
- a wastewater purification group arranged and configured to receive at its inlet the civil and/or industrial wastewater fed by the one or more feeding ducts and to output a purified liquid and a biomass with a dry substance content of not more than 5% by weight;
- a sludge treatment line comprising a mechanical dehydration unit configured to receive at its input the biomass and dehydrate it mechanically so as to output a residual sludge with a dry fraction greater than or equal to 15% by weight, the sludge treatment line being connected to the purification group so as to extract the biomass and feed it to the mechanical dehydration unit;
wherein the at least one batch mixing reactor is arranged and configured to receive at its input said residual sludge output from the mechanical dehydration unit and to use it as a starting biological sludge.

Preferred embodiments of the process of the invention are described in the dependent claims which are fully cited herein.

By means of the present process, a granular fertilizer in the dried solid state, in particular in the form of small spherical granules, is produced from a starting biological sludge.

Advantageously, the dried fertilizer is obtained by using mainly the heat generated by the exothermic reactions which occur during the treatment steps.

The fertilizer obtained may have high percentages of calcium and sulphur, resulting in an optimum corrective agent for saline and/or alkaline soils.

In particular, the mixing of the biological sludge with sulphuric acid causes a sharp increase in the temperature, due to dissolving of the acid in the sludge water and the triggering of chemical reactions, in particular the dehydration of the carbohydrates and the denaturation of the proteins.

Synergically speaking, the subsequent introduction of calcium oxide generates intense heat due to both the hydration reaction of the oxide and the formation of calcium sulphate.

The heat generated using the chemical reagents on the organic fraction of the mass undergoing treatment is synergically exploited in order to obtain the dehydration of the fertilizer in a rotary reactor, resulting in a dried solid product in the form of substantially spherical granules.

With the process it is possible to obtain advantageously a fertilizer which may be easily marketed and used, owing also to the possibility of adjusting the particle size of the fertilizer obtained, which may be in the form of spherical granules with a variable diameter, in particular of between 2 and 30 mm, for example 4-5 millimetres.

The treatment process according to the invention may also be applied within a plant for the biological purification of wastewater, using if necessary in an original manner certain apparatus of the purifier itself. When the process is integrated in a civil and/or industrial wastewater purification plant, advantageously the result is obtained that the purifier may be converted into a plant for the production of granulated fertilizer which is directly marketable or able to be used on agricultural soils. Therefore, there is no need to extract from the purification plant any material which may be classified as waste, resulting in a major advantage from both an economic point of view (disposal costs) and a practical point of view (disposal methods).

According to particularly preferred aspects, with the present process it is therefore possible to obtain simultaneously:
- ) a corrective fertilizer for alkaline and/or saline soils, with percentages of CaO>20% and SO₃>25%, containing hydrolysed proteins;
- ) dehydration of the fertilizer, by making use of the heat generated by the exothermic reactions which occur owing to mixing with the reagents;
- ) complete sanitization of the fertilizer by means of the destruction of the microbial flora present in the starting material;
- ) configuration of the fertilizer in the form of spherical granules of variable diameter which can be modified depending on the market requirements.

Further details may be obtained from the following description of non-limiting examples of embodiment of the subject of the present invention, provided with reference to the accompanying drawings, in which:
Figure 1: shows a block diagram illustrating the process sequences of an example of implementation of the process according to the invention;
Figure 2: shows a schematic view of an example of embodiment of a treatment plant for carrying out the process according to the present invention;
Figure 3: shows a schematic perspective transparent view of a reaction chamber of a preferred example of a rotary reactor for use in the process according to the invention; and
Figure 4: shows a schematic longitudinally sectioned view of the reaction chamber according to Fig. 3.

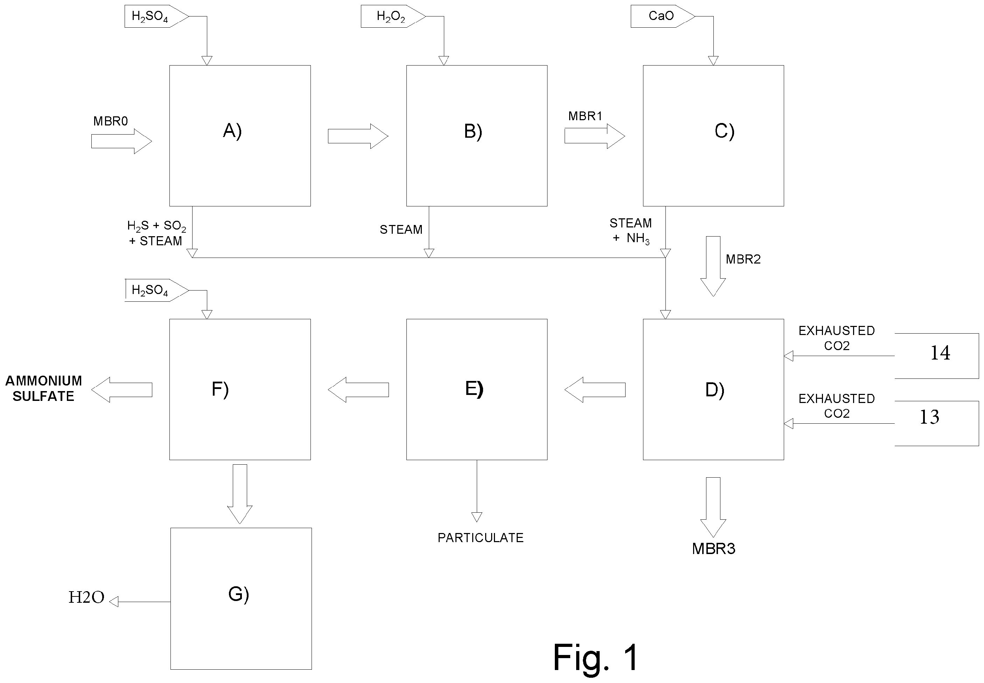

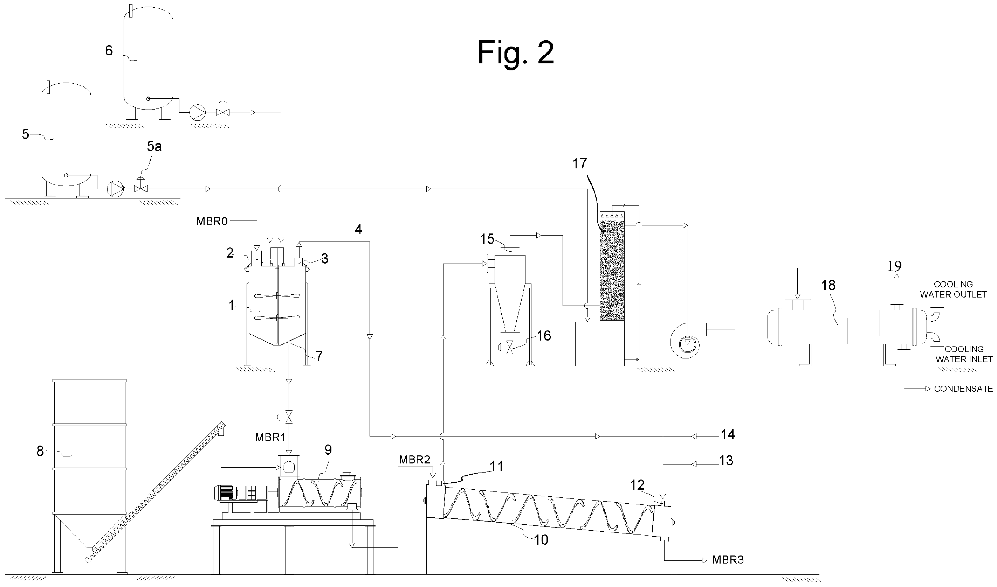

With reference to Figures 1 and 2, a process according to the invention for treating residual starting biological sludge (Residual Biological Material) MBRO will now be described, with reference to a plant representing an example of implementation thereof.

The starting biological sludge MBRO is preferably composed of or consists of one or more of the following residual biological materials: purified dehydrated biological sludge, the organic fraction of solid urban waste (OFSUW), methanogenic fermentation digestates, waste of animal origin.

The starting biological sludge has preferably a neutral pH.

With reference to the preferred embodiments shown in Figs 1-3, it is envisaged that a preferred mode of implementation of the treatment process according to the invention comprises the following steps:
STEP A): Acid conditioning of the starting biological sludge (MBRO) by means of mixing with sulphuric acid, resulting in a fluid acid sludge with a temperature higher than and viscosity less than the starting biological sludge;
The biological sludge MBRO, in the semi-solid state with dry substance ≥15% and generally ≤40% by weight, is introduced into a mixing reactor 1, for example made of carbon steel lined internally with anti-acid enamel, via a hole 2 situated at the top. The reactor is for example vertical and provided with a vertical shaft on which horizontal vanes for mixing the mass are provided.

Shaft, vanes and any device housed inside the reactor may be lined with an anti-acid enamel. The reactor is provided with a hole 3 for discharging the gases produced by the reactions which occur inside it, for example situated alongside the hole at the top through which the starting sludge to be treated enters.

Said discharging hole may be connected to a pipe 4, which is also anti-acid lined, intended to convey gases and vapours to a following treatment step D).

The mixing reactor is preferably provided with a level sensor, for example an ultrasound sensor, positioned on the outside of the reactor wall, and/or with means for detecting an internal temperature, in particular comprising a thermocouple.

The reactor 1 may advantageously be thermally insulated, for example by means of a rockwool jacket surrounded by a sheet of AISI 316 stainless steel.

The reactor is designed to operate in batch mode.

Once the reactor has been filled with a quantity of starting biological sludge MBR0 to be treated, a quantity of concentrated sulphuric acid (H₂SO₄ >90%) is added, this being obtained for example from a silo 5 and being supplied by means of suitable dispensing/metering devices 5a. This silo 5 and the metering devices 5a form an example of means for supplying sulphuric acid, containing sulphuric acid and configured to supply the quantity of sulphuric acid to the mixing reactor 1.

The quantity of sulphuric acid is preferably equal to the overall weight of the dry substance of the biological sludge MBR0 introduced into the mixing reactor.

Immediately the temperature rises in proportion to the mols of di H₂SO₄ introduced, which dissociate upon coming into contact with the water present in the treatment sludge.

The following main reactions take place inside the reactor:
- dehydration of the carbohydrates
- denaturation of the proteins
- hydrogenation of the lipids

Other secondary reactions may occur and provide further heat; in particular the sulphuric acid combines with lesser components of the sludge being treated:
- CaCO₃ present in the ashes of the sludge introduced, to give gypsum;
- NH₄⁺ diffused throughout the liquid phase, the main component of the sludge, to give ammonium sulphate.

However, in view of the limited amount of these substances present in the sludge, the quantity of heat provided is negligible.

By introducing sulphuric acid as indicated above, an increase in the temperature of the starting biological sludge BRM0, generally of between 40-50°C, is obtained.

An example of quantification of the thermal kW which are generated owing to the enthalpies of the compounds formed through the exothermic reactions described in this and the following steps is illustrated in Example 1 at the end of the description.

During the mixing treatment with sulphuric acid, there is an emission of steam together with the gaseous products of the reaction, in particular SO₂ and H₂S.

An example of management of these compounds will be described in Step D).

A reaction time for the acid conditioning may be between 15 and 45 minutes, preferably about 30 minutes.

Following this acid conditioning, the organic material diminishes in viscosity depending on the temperature reached and the attachment of the H₂SO₄ onto the organic structures which form it.

The proteins are denatured into compounds of smaller molecular weight, i.e. into polypeptides and amino acids, while the cellulose fibres, dehydrating, lose their original physical structure.

From a physical point of view, a liquefaction of the acid sludge occurs, with an increase in the dry fraction. The material becomes easily pumpable because the acid breaks the bonds formed by the polyelectrolyte, the proteins and the carbohydrates; the acid sludge therefore collapses in the form of a dense liquid.

The material is therefore a fluid acid sludge with a temperature greater than and viscosity less than the starting biological sludge and may be subjected to the treatment of Step B).

STEP B): Oxidising treatment of the fluid biological sludge, rendered acid in Step A), by means of mixing with a solution of hydrogen peroxide.

A solution of hydrogen peroxide, in particular 130 volume oxygenated water (H₂O₂ 35%), supplied from a tank 6, is introduced into the same reactor, which is kept in operation.

The quantity introduced may be between 10% and 40% of the volume of the sulphuric acid previously introduced, preferably 1/3rd in volume.

The 'H₂O₂ combines with the residual H₂SO₄ to give H₂SO₅ (peroxy mono sulphuric acid) and water.

The H₂SO₅ reacts violently with the residual organic substance, completing the dehydration of the carbohydrates and the denaturation of the proteins. Mainly water vapour emerges from the top discharge hole 3.

The reactions caused by the introduction of hydrogen peroxide, which are highly exothermic, increase further the temperature of the acid biological mass; the increase in temperature consists in particular of a further 5-10 degrees with respect to the maximum temperature reached during the previous step following the introduction of the sulphuric acid. The increase in the temperature of the acid mass with respect to the starting biological sludge BMR0 may be between 50 and 60°C.

The biomass being treated is completely fluid and may be easily pumped.

After a time period of between 15 and 45 minutes, preferably about 30 minutes, the organic biological sludge MBR1 resulting from the oxidising treatment may be extracted from the mixing reactor, for example through the opening of a valve located on the bottom of the said reactor 7.

Advantageously, opening of the valve may be adjustable, so as to be able to manage the outgoing flowrate.

A pH of the fluid acid sludge MBR1 resulting from the oxidising treatment may be generally between 0 and 1, owing to the treatment with sulphuric acid and oxygenated water.

If it is intended to implement the present process continuously instead of batchwise, the steps A) and B) described may advantageously be carried out using a multiple logic (multibatch) so as to provide in the following Step C the material to be continuously treated.

STEP C): During this step, calcium oxide (CaO) is added to the fluid acid sludge MBR1 resulting from the oxidising treatment in order to make it alkaline and obtain heat by means of the series of reactions which will occur during the following Step D).

The acid organic sludge, in the fluid state MBR1, output from Step C), is introduced into a horizontal mixer 9 (or other mixing system) and mixed with calcium oxide in the form of a ventilated powder supplied from a silo B.

The quantity of calcium oxide in power form introduced is preferably regulated so as to represent by weight 60-120%, in particular 80-100%, of the weight of the sulphuric acid introduced in Step A).

A preferred, but not exclusive, type of mixing system consists of a horizontal blade mixer 9 with, for example made of AISI 316 stainless steel or anti-acid enamelled steel.

The revolving speed of the internal shaft and the blades may be between 10 and 100 rpm, preferably 30-50 rpm.

The mixing system is configured so that thorough mixing between the reactive powder agent and the acid fluid MBR1 is performed. The temperature starts to rise immediately owing to the hydration of the lime. The period of time spent inside the mixer may be between 15 and 45 seconds, and is preferably about 30 seconds.

Mixing with calcium oxide powder results in an alkaline mixture MBR2 comprising hydrolysed organic material and calcium sulphate. The pH of the mixture MBR2 may be typically >= 10.

The alkaline mixture MBR2 obtained is then discharged from the mixer, for example through a side hatch.

STEP D): In Step D) the alkaline mixture MBR2 output from the mixer of the preceding Step C continues and completes the chemical reactions which have already started in Step C).

The alkaline mixture MBR2 comprising hydrolysed organic material and calcium sulphate is fed inside the rotary reactor 10 with a reaction chamber extending between an upstream inlet for feeding the mixture and a downstream outlet for extraction of a granular fertilizer MBR3.

The rotary reactor 10 is rotationally operated so that the mixture MBR2 is mixed and turned around and moves from the upstream inlet to the downstream outlet inside the reaction chamber 100.

During the rotation of the rotary reactor 10 and the transit of the mixture inside the reactor from the upstream inlet to the downstream outlet, a temperature of the mixture inside the reaction chamber exceeds 90°C and the mixture is dehydrated with the production of steam and an increase in the percentage of dry substance of the mixture to more than 55%, forming a dried surplus material which is a granular fertilizer MBR3 in the form of granules with a residual moisture less than or equal to 40%, preferably of between 10% and 30%, suitable for use as a corrective for alkaline and/or saline agricultural soils.

The granular fertilizer MBR3 obtained may then be extracted from the downstream outlet of the rotary reactor.

The rotary reactor further comprises an upstream opening 11 for the output of gaseous substances, in particular the steam, from the reaction chamber.

Advantageously, as will become clear further below, the thermal energy necessary for dehydration of the mixture comprising hydrolysed organic material and calcium sulphate and for formation of the granulated dried fertilizer is obtained mainly from the exothermic reactions in course during treatment.

According to preferred embodiments, by means of at least one downstream inlet 12 of the reactor, the reaction chamber of the rotary reactor is fed at least with a gaseous stream containing CO₂, which moves in the opposite direction to the direction of advancing movement of the mixture from upstream to downstream.

Therefore, during the rotation of the rotary reactor and the transit in the reactor, the heat supplied by the at least one gaseous stream comprising dehydrated carbon dioxide dehydrates and further dries the granulated mixture.

In addition to this, the granulated mixture reduces its pH owing to the reaction between the residual calcium hydroxide and the carbon dioxide.

Optionally, the gaseous stream extracted from the starting sludge acidification step and/or the oxidising treatment step, comprising steam and optionally SO₂ and/or H₂S, may also be supplied as a counter-flow to the reaction chamber by means of a downstream inlet.

In greater detail and with reference to the plant shown by way of example in Fig. 2, the following may be conveyed through a downstream inlet hole 12 into a downstream head section of the rotary reactor 10, which is positioned at the lower height:
- a first gaseous stream comprising CO₂, preferably consisting of the exhaust fumes discharged from an electric generator 13, for example designed to supply electric energy for the movement of the plant and to introduce thermal energy and CO₂ into the rotary reactor; and/or
- A second gaseous stream comprising CO₂, preferably consisting of the exhaust fumes from a methane or other fuel burner 14 which also has the task of introducing into the reactor further thermal energy and further CO₂; and/or
- the gaseous substances consisting of steam and any SO₂ and H₂S produced during the reaction of the organic matter with the sulphuric acid during the previous Step A) and/or Step B.

In the rotary reactor 10 the following main reactions occur:
- hydration of the calcium oxide with formation of the hydrate Ca(OH)₂;
- neutralization of the residual sulphuric acid, with formation of dehydrated gypsum (CaSO₄*2H₂O);
- formation of calcium carbonate, from the combination of the residual hydrated lime with the CO₂ of the combustion fumes and the exhaust fumes of the electric generator;
and the following secondary reactions:
- formation of calcium nitrate and nitrite, from the combination of nitrogen oxides, present in the combustion exhaust fumes;
- formation of calcium sulphite CaSO₃, from the combination of the sulphur dioxide with the calcium hydrate Ca(OH)₂;
- formation of calcium sulphide (CaS) from the combination of H₂S and Ca(OH)₂.

During the course of the aforementioned reactions, in particular the main reactions, an intense heat is generated owing to the formation enthalpy of the products.

The temperature exceeds 90°C and results in the intense generation of steam which dehydrates the reacting alkaline mixture. The dehydration may be further favoured by the incoming heat due to the exhaust fumes discharged by the electric generator and the burner.

The calcium oxide introduced in the previous Step C) is in any case in excess of the quantity of sulphuric acid and other process acid compounds, so that the extracted end product has a pH greater than 8 and less than the pH of the incoming mixture MBR2, in particular generally ranging between 9 and 9.5.

The heat present in the reactor and the alkalinity allow stripping of the ammonia which may be present and which may be discharged from the mass being treated, together with the steam.

The rotary reactor 10 may for example be a cylindrical steel reactor which is positioned parallel to the ground, but which has an inclination towards the downstream outlet, in particular with an angle of between 2° and 7°, in the example 5°. It may be lined internally with an antic-acid resin.

Advantageously, by suitably choosing the dimensions of the reactor, it is possible to adapt the treatment process to the hourly quantity of incoming material, to a desired percentage of dry substance in the fertilizing product which is output and/or to the diameter of the spherical granules of fertilizer which are formed during the period of time spent inside the reactor.

Preferred dimensions of the reactor may comprise a diameter of the reactor of between 500 and 1500 mm and, preferably, 1000 mm, and a length of between 5 and 15 metres, preferably 10 metres.

The reactor may be completely insulated in order to prevent heat dispersion. The reaction chamber may for example be defined by a cylindrical or frustoconical drum designed to rotate with respect to a fixed support, for example by means of rollers.

The rotational actuating systems, such as a gearwheel integral with the reaction chamber and meshing with an electric motor controlled by an inverter, may be conventional and are not described in detail.

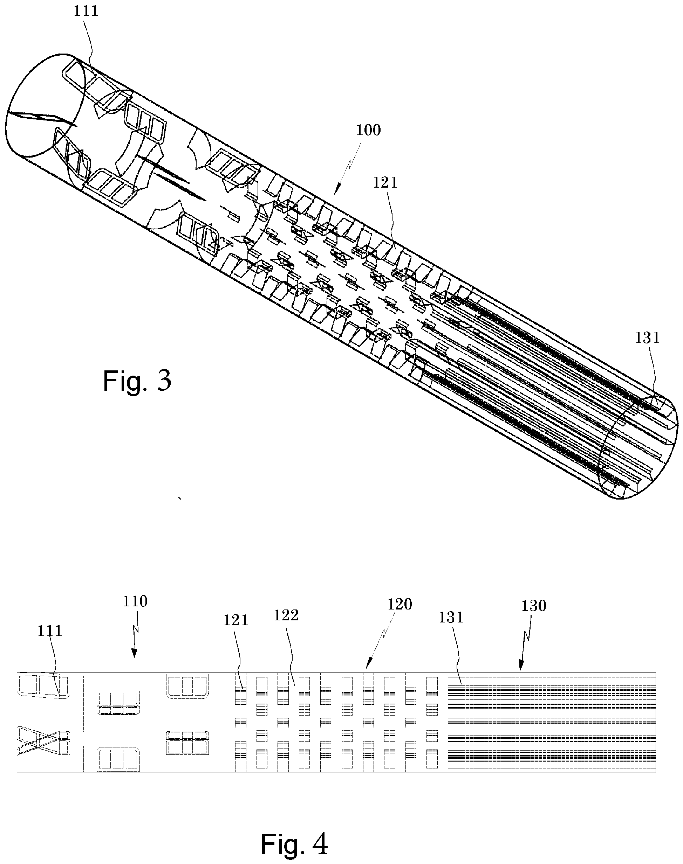

With reference to Figures 3 and 4, in a preferred example of the rotary reactor 10, movement means, in particular in the form vanes which allow movement and an overturning action are welded inside the reaction chamber 100 of the reactor.

With each rotation, the material is mixed, turned around and moved towards the discharge outlet.

In the head section of the rotary reactor 10, which is positioned higher beyond the inlet for the fluid material output from the previous Step C there is a hole for the output of the gaseous substances 11 which have travelled along the reactor in the opposite direction to the direction in which the product being treated travels along.

During rotation of the reactor 10, the material, dehydrating, assumes the form of balls of fertilizer MBR3 which may be extracted from the downstream discharge outlet. Once the spherical granules of fertilizer MBR3 have been extracted they may be collected together and placed in bags for commercial distribution.

In greater detail, the preferred example of a cylindrical granulation and drying reactor 10 shown in Figs. 3 and 4 has preferably a reaction chamber 100 with at least two or three different sectors 110, 120, 130 arranged in sequence along the axial length of the reactor.

A first, upstream, sector 110 receives the mixture MBR2, which is still reacting and has the consistency of a dense paste, and acts in the manner of "cement mixer". The first sector 110 has first mixing means, preferably in the form of first vanes 111 which are suitable for mixing a dense fluid and rotationally integral with the internal surface of the reaction chamber.

A second sector 120, which is arranged downstream of the first sector 110, acts as a granulator for the reacting mixture. For this purpose, the second sector may have second mixing means, in particular in the form of small vanes 121 which have a smaller size and are greater in number than the first vanes of the first sector and which are arranged on the internal surface of the reaction chamber so as to leave a plurality of circumferential corridors 122 for rolling the mixture being dehydrated.

During the transit from upstream to downstream in the first and in the second sectors, the mixture MBR2 subject to reaction is gradually dehydrated and reaches a percentage of dry substance which is greater than 55% (granulation dry matter), so that the mixture granulates, forming substantially spherical granules owing to the rolling inside the circumferential corridors 122 between the vanes 121 of the second sector.

Preferably, a third, downstream, sector 130 is configured for optimum completion of the dehydration and drying of the granules of fertilizer. For this purpose, the third sector may comprise third mixing means designed to continuously turn over the granules being formed during rotation of the reactor and the advancing movement thereof towards the discharge outlet.

According to the preferred example shown, these third mixing means may be in the form of radial vanes 131 which are continuous in the axial direction and arranged in a spoke-like manner on the internal surface of the reaction chamber 100 in the third sector 130.

According to preferred modes of implementation of the process of the invention, the gaseous substances comprising steam extracted from the outlet opening 11 positioned in the upstream head section may optionally be conveyed to a following Step E) or to a following treatment Step G).

Step E): Step E) involves purifying, of solid particles, the gaseous substances output from the rotary reactor 10 so as to eliminate the dusts which the flow of gaseous substances output may convey outside the reactor, keeping them suspended with the turbulence of the flow.

This steps represents an optional environmental protection which may be implemented in some applications of the process.

According to a preferred example of implementation, the gaseous substances comprising gas and steam and extracted from the rotary reactor 10 during Step D) are conveyed to a cyclone 15 for eliminating the dusts. Since the outgoing flow of gaseous substances is saturated with water vapour advantageously it is kept in this state in order to prevent condensation on the walls of the apparatus and the consequent fouling due to the deposition of the solid parts, favoured by the presence of water in the liquid state.

The cyclone 15 may therefore be completely surrounded by a double wall which forms a chamber with circular cross-section inside which a hot fluid is circulated. For example one of these two modes may be chosen:
- circulation of diathermic oil heated by the burner and recirculated inside the jacket by means of a regulatable delivery pump.
- direct circulation of hot fumes removed from the exhausts of the electric generator or the burner described in the previous steps.

The hot fluid, which circulates inside the cavity created on the outside of the cyclone, prevents the temperature of the wall and the temperature inside the cyclone from falling below the dew point, this avoiding the condensation of the steam.

The whole apparatus may be lined with a heat insulant in order to prevent the dispersion of the heat.

The separated dust is extracted from the bottom of the cyclone through the opening of an automatic valve 16, with a predefined frequency.

The gaseous substances, purified of the solid particles, exit the cyclone and may be optionally conveyed to a further treatment Step F).

STEP F) extraction of the ammonia present in the gaseous substances and generated with raising of the pH during the previous Steps C) and D), resulting in a gaseous substance consisting mainly of water vapour.

In addition to water vapour, there may also be present unreacted fractions of CO₂ and NOₓ, gases originally generated by the combustion of the methane in the electric generator and by the burner.

As in the preceding Step E), an extraction device prevents lowering of the temperature of the gaseous substances below the dew point.

Said extraction device may consist of a cylindrical scrubber 17, for example completely made of AISI 316 stainless steel or anti-acid enamelled steel, inside which filling bodies made of anti-acid and heat-resistant material are inserted. The ratio between the height of the cylinder and its diameter is between 4 and 6, and is preferably equal to 5.

In a similar manner to the cyclone, described in the preceding Step E), the scrubber is made with a twin wall and a hot fluid is conveyed inside the cavity between the two walls and the heat is transferred by means of:
- circulation of diathermic oil heated by the burner and recirculated inside the jacket by means of a regulatable delivery pump.
- direct circulation of hot fumes taken from the exhausts of the electric generator or the burner described in the previous steps.

The external wall and all the parts in contact with the environment are insulated in order to prevent the dispersion of the heat.

The base of the scrubber is formed by a tank which contains sulphuric acid with a concentration of 50%. A steel anti-acid grid separates the tank from the rest of the scrubber and has the function of separating the filling bodies and keeping them in position. Above the grid, at the base of the filling bodies, the entrance for the gaseous substances resulting from the previous Step E) is provided.

The tank is also made with a double heated wall as seen above. In addition, in order to perform heating of the sulphuric acid, in particular during the plant start-up steps, an electric resistance controlled by a thermostat is housed at the base of the tank.

The sulphuric acid is drawn from the tank by an external pump and conveyed to the top of the scrubber, where it is released onto the filling bodies by a ring of nozzles.

A pipe is fixed to the top part of the scrubber and draws off the gaseous substances, after transit into the device, by means of suction of a blower located on the ground.

The vapours which enter into the scrubber start to rise up, passing through the cross-section of the filling bodies. The flow passes around the surface of the bodies, encountering the downward flow of sulphuric acid. The ammonia combines with the sulphuric acid so as to produce ammonium sulphate (NH₄)₂SO₄, which remains dissolved in the downward acid flow.

During the operating hours, the acid is consumed, being combined with the ammonia, its pH rises and must be replaced. The product is a concentrated solution of ammonium sulphate which is one of the main mineral nitrogen fertilizers marketed also in fluid form.

A continuously operating pH meter signals the need for replacement to be carried out.

Depending on the location where the present process will be conducted, the water vapour output by the blower may be discharged into the atmosphere or conveyed to the following Step G), which constitutes an optional step of the present process.

STEP G): The execution of this optional step is particularly suitable when the present process is applied to the treatment of sludge produced at the end of a wastewater purification treatment.

During this step, the steam sucked in by the blower according to the preceding Step F is conveyed to a condenser 18 which preferably uses, as cooling fluid, the purified water removed from the purifier discharge outlet. The condensate is conveyed to the front end of the purification plant, for example being discharged inside the discharge ducts of the centrifuges for mechanical dehydration of the sludge. The condenser also has an air outlet 19.

It should be noted that the quantity of ammonia stripped in the preceding Step D) is directly related to the concentration of nitrogen which is contained in the organic matter subjected to the present treatment and which therefore may be extremely variable.

Normally, the amounts involved are small, although nevertheless they may not be freely discharged into the atmosphere or into the surface water bodies, in order to avoid negative consequences for the environment.

However, in the case where the process is to be applied at the end of a purification process, the quantity of stripped ammonia always constitutes a negligible amount when compared with the treatment potential of an ordinary purification plant.

In this case the present Step G) may be applied directly after the Step D), avoiding the need to perform Steps E) and F).

It is therefore clear how the process according to the present invention is able to provide a solution to numerous problems resulting from the need to recondition various biological materials, such as those mentioned, making it possible to obtain a dried biological material with a residual moisture of less than 40%, shaped in the form of substantially spherical granules, i.e. a fertilizer ready for use on fields using ordinary agricultural distribution means.

The fertilizer obtained has organic components chemically degraded into molecules and structures with simpler structures compared to the starting structures, this facilitating the action of the microbial flora of the soil during conversion of these substances into elements suitable for plant nutrition and soil conditioning.

The fertilizer obtained has in particular hydrolysed proteins, dehydrated carbohydrates, hydrogenated lipids and fibres with a demolished structure, high percentage of sulphur expressed as SO₃, and high percentage of calcium expressed as CaO.

The process does not require the supply of huge amounts of fossil fuel nor the assistance of high energy consuming machines such as pellet, briquette or granule making machines.

In particular the thermal energy necessary for dehydration of the mixture comprising hydrolysed organic material and calcium sulphate and for the formation of the granulated dried fertilizer may be obtained in a percentage amount greater than or equal to 55%, preferably between 60% and 70%, from the exothermic reactions due to the acid conditioning by means of sulphuric acid, to the oxidising treatment by means of hydrogen peroxide solution, to the mixing with calcium oxide in powder form, and optionally to the heat supplied by one or more gaseous streams comprising carbon dioxide supplied in a counter-flow inside the rotary reactor.

The fertilizing material obtained moreover comes under the definition of defecation gypsum which can be used for the correction of agricultural soils. It is moreover of great benefit in both alkaline and saline soils.

The defecation gypsums are very effective both in "saline" soils, which are rich in sodium, and in "non-saline alkaline" soils, which are also rich in sodium and/or potassium; in these situations the gypsum favours the reequilibrium of the cation exchange capacity (c.e.c.), causing displacement of the monovalent, alkaline metal ions (sodium and magnesium) from the colloidal particles in the ground, thus favouring the bivalent alkaline ions (calcium and magnesium).

The gypsum directly provides calcium, which is needed by plants for reinforcement of the cell walls, making them more resistant to diseases and frost, and sulphur is also fundamental for the activity of the useful bacterial flora in the ground.

With the process of the present invention, the fertilizer obtained may also be completely sanitized from the microbiological point of view and completely without odour-producing emissions which may create smell-related problems.

According to particularly preferred modes of implementation of the treatment process according to the present invention, said process is integrated in a civil and/or industrial wastewater purification cycle carried out in a purification plant (purifier).

The present invention therefore relates to a method for treating civil and/or industrial wastewater, comprising the following steps:
- ) feeding of civil and/or industrial wastewater, for example from a sewer, to a purifier;
   - purification of the waste water resulting in a purified liquid and a biomass with a dry substance content of not more than 5% by weight;
- ) extraction of the biomass with a dry substance content of not more than 5% by weight and mechanical dehydration of the biomass, resulting in a residual biological sludge with a dry fraction on average of between 15% and 40% by weight;
- ) treatment of the residual biological sludge in accordance with Steps A)-D) and optionally G) of the present process.

According to conventional technology, purification of the wastewater may include denitrification, oxidation and nitrification operations, which are not described in detail here.

Separation and extraction of the biomass may be performed by means of sedimentation, from where the biomass is extracted along a sludge line and fed to the mechanical dehydration step.

The separated purified liquid, generally consisting of purified water, may optionally be further sanitized before being introduced back into the assigned water bodies.

When the treatment process is integrated in a wastewater purifier, the important technical effect is obtained of producing, directly inside said purifier, a solid fertilizer, which may be easily marketed; there is therefore never any need to remove a biomass classifiable as waste from the purification plant, nor to manage the transportation and disposal of large quantities of fluid sludge, with a considerably saving from a logistical and economic point of view.

In addition, the process steps described above and the associated apparatus may be integrated synergically in the purifier, for example by applying them downstream, of the mechanical dehydration step, so as to obtain the granular fertilizer as sole material produced by the purifier and discharging the condensate output from Step G) at the front end of the purification plant, i.e. in wastewater supply body, at the start of the purification process.

### EXAMPLE 1

The present Example 1 illustrates the modification of a dehydrated biological sludge mechanically produced in a wastewater purification plant, code CER 190805, when subjected to a treatment method according to the invention described above.

An annual treatment of 10,000 tonnes of residual biological sludge is assumed, i.e. the amount produced by an average-sized provincial capital, said sludge having a dry substance (d.s.) content which can be typically found in a purification sludge dehydrated by means of a centrifuge.

The data is obtained from experimental tests.

Batch treatment for an incoming supply of 10 tonnes of dehydrated sludge for a total duration of 2 hours is assumed.

### CHARACTERISTICS OF THE STARTING SLUDGE

| | |
|---|---|
| D.S. (%) OF SLUDGE AS ORIGINALLY SAMPLED | **24.88** |
| TONNES / YEAR AS SAMPLED | **10,000** |
| TONNES / YEAR OF DRY SUBSTANCE | **2488** |

| | | |
|---|---|---|
| MOSITURE CONTENT AT 105° AS SAMPLED | **75.12** | % as sampled |
| INCOMING SLUDGE IN BATCH | **10.0** | tonne |
| INCOMING DRY SUBSTANCE | **2.49** | tonne |
| QUANTITY OF CALCIUM AS CaO | **0.0** | % of d.s. |
| QUANTITY OF SULPHUR AS SO₃ | **0.0** | % of d.s. |
| NITROGEN as organic N | **3.50** | % of d.s. |
| CARBON as organic C | **30.0** | % of d.s. |

| **CHEMICAL REAGENTS USED** | | |
|---|---|---|
| **REAGENTS INTRODUCED** | **STRENGTH** | **TONNES** |
| In 10 tonnes of sludge as sampled | | introduced in 10 tonnes of sludge as sampled |
| H₂SO₄ - sulphuric acid | Concentrated 18 mols/litre | **2.490** |
| H₂O₂ - hydrogen peroxide | Solution 35% | **0.276** |
| CaO - calcium oxide | Commercial 92% - moisture 1% | **1.630** |
| CO₂ - carbon dioxide | From methane combustion | **0.171** |

| | |
|---|---|
| **THERMAL ENERGY CONSIDERED IN A BATCH DURING A 2 HOUR TIME PERIOD** | **kW** |
| Enthalpy of dehydration of carbohydrates (assumed as sucrose) | **517** |
| Solution of H2SO4 in water forming the sludge | **496** |
| Enthalpy of Ca(OH)₂ formation | **660** |
| Enthalpy of CaSO₄ formation | **651** |
| Enthalpy of CaCO₃ formation | **159** |
| Enthalpy of secondary compound formation (verified) | **600** |
| Exhaust gases from 100kWh methane electric generator (efficiency 0.7) | **152** |
| Combustion gas from methane burner | **800** |
| Thermal kW available upon evaporation of the water | **4035** |
| Kg of evaporable water | **5887** |

### CHARACTERISTICS OF FERTILIZER OUTPUT

| | | |
|---|---|---|
| DRY SUBSTANCE AT 40° C | **76.62** | % as sampled |
| FERTILIZER OUTPUT FROM BATCH | **8.6** | tonnes |
| DRY SUBSTANCE OUTPUT FROM BATCH | **6.59** | tonnes |
| QUANTITY OF CALCIUM AS CaO | **22.3** | % of d.s. |
| QUANTITY OF SULPHUR AS SO₃ | **30,5** | % of d.s. |
| NITROGEN as organic N | **1.3** | % of d.s. |
| CARBONS as organic C | **11.0** | % of d.s. |

### OVERALL MASS OUTPUT FROM THE TREATMENT OF 10,000 TONNES

| | |
|---|---|
| **FERTILIZER IN THE FORM OF BALLS WITH 4 mm DIAMETER** | **8600 tonnes** |
| **DRY SUBSTANCE** | **6590 tonnes** |

Although described in connection with a number of embodiments and a number of preferred examples of implementation of the invention, it is understood that the scope of protection of the present patent is determined solely by the claims below.

## Claims

1. Process for treating a starting biological sludge (MBRO) with a dry fraction and a liquid fraction, wherein the dry fraction is greater than or equal to 15% by weight of the starting biological sludge, comprising:
- acid conditioning of the starting biological sludge (MBRO) by means of mixing with sulphuric acid, resulting in a fluid acid sludge with a higher temperature and a lower viscosity than the starting biological sludge;
- oxidising treatment of the fluid acid sludge by means of mixing with a hydrogen peroxide solution;
- mixing of the fluid acid sludge (MBR1) resulting form the oxidising treatment with calcium oxide in powder form, resulting in an alkaline mixture (MBR2) comprising hydrolysed organic material and calcium sulphate;
- feeding of the mixture (MBR2) comprising hydrolysed organic material and calcium sulphate inside a rotary reactor (10) with a reaction chamber (100) extending between an upstream inlet for feeding the mixture and a downstream outlet, further comprising an upstream opening (11) for outputting gaseous substances;
- rotating the rotary reactor (10) so that the mixture (MBR2) is mixed and turned around and moves from the upstream inlet to the downstream outlet in the reaction chamber (100);
wherein during rotation of the rotary reactor (10) and transit inside the reactor of the alkaline mixture (MBR2) from the upstream inlet to the downstream outlet, a temperature of the mixture inside the reaction chamber (100) exceeds 90°C and the mixture is dehydrated with production of steam and an increase in the percentage of dry substance of the mixture to more than 55%, forming a dried resulting material which is a granular fertilizer (MBR3) in the form of granules with a residual moisture less than or equal to 40%, preferably of between 10% and 30%, suitable for use as a corrective for alkaline and/or saline agricultural soils;
- extraction of the granular fertilizer (MBR3) from the downstream outlet of the rotary reactor.

2. Process according to Claim 1, wherein the acid conditioning is performed inside at least one batch reactor (1) and preferably the oxidising treatment is performed in the same batch reactor (1).

3. Process according to one of the preceding claims, wherein the acid conditioning is performed using concentrated sulphuric acid, preferably H₂SO₄ with a concentration of more than 90%.

4. Process according to one of the preceding claims, wherein a quantity of sulphuric acid, in particular concentrated sulphuric acid, equal to the overall weight of the dry substance of the starting biological sludge (MBRO) is added for acid conditioning of the starting residual biological sludge.

5. Process according to one of the preceding claims, wherein the acid conditioning of the starting biological sludge causes an increase in the temperature of the biological sludge of between 40-50°C.

6. Process according to one of the preceding claims, wherein:
- a reaction time for the acid conditioning is between 15 and 45 minutes, preferably 25-35 minutes; and/or
- a reaction time for the oxidising treatment is between 15 and 45 minutes, preferably 25-35 minutes.

7. Process according to one of the preceding claims, wherein: during acid conditioning a gas comprising steam, SO₂ and H₂S is extracted; and/or during the oxidising treatment a gas essentially consisting of water vapour alone is extracted.

8. Process according to one of the preceding claims, wherein, during the oxidising treatment of the fluid acid sludge, a volume of hydrogen peroxide solution of between 10% and 40% of the volume of the sulphuric acid previously introduced, preferably between 25% and 35% by volume, is introduced; and/or wherein the hydrogen peroxide solution is oxygenated water, preferably in the commercial concentration of 35%.

9. Process according to one of the preceding claims, wherein the oxidising treatment of the fluid acid sludge causes a further increase in the temperature of the acid sludge; the increase in temperature being in particular between 5° and 10°C with respect to the maximum temperature reached during the acid conditioning step and/or between 50° and 60°C with respect to the temperature of the starting biological sludge (MBRO).

10. Process according to one of the preceding claims, wherein at least one gaseous stream containing CO₂, and optionally at least one gaseous stream extracted from the starting sludge acidification step and/or the oxidising treatment step and comprising steam and optionally SO₂ and/or H₂S, is fed, via at least one downstream inlet of the reactor, to the reaction chamber (100) of the rotary reactor (10); the at least one gaseous stream moving in the opposite direction to the advancing direction from upstream to downstream of the alkaline mixture (BMR2) comprising hydrolysed organic material and calcium sulphate, during rotation of the rotary reactor (10).

11. Process according to the preceding claim, wherein:
- the at least one gaseous stream comprising CO₂ comprises exhaust fumes of a burner and/or of an electric generator, in particular operated by a combustion engine or gas turbine; and/or
- during transit inside the rotary reactor (10) the at least one gaseous stream containing CO₂ supplies heat to the mixture (BMR2) inside the reaction chamber (100), favouring dehydration, and reduces the pH of the mixture owing to a reaction between residual calcium hydroxide in the mixture and the carbon dioxide of the gaseous stream.

12. Process according to one of the preceding claims, **characterized in that** the rotary reactor (10) has a plurality of movement means (111;121;131), in particular vanes, integral with an inner surface of the reaction chamber (100) and designed to rotate integrally therewith in order to turn around the mixture in transit inside the reaction chamber; and/or **in that** the rotary reactor (10) is inclined with a gradient from upstream to downstream, preferably with a gradient of between 2° and 7°.

13. Process according to one of the preceding claims, **characterized in that** the starting biological sludge (BMR0) has a percentage of dry substance less than or equal to 40%, preferably between 20% and 40%.

14. Process according to one of the preceding claims, wherein the starting biological sludge consists of or comprises: a residual sludge of a wastewater purification cycle, an organic fraction of solid urban waste (OFSUW), a methanogenic fermentation digestate, waste of animal origin, or a combination thereof; wherein, preferably, the starting biological sludge is a residual sludge of a wastewater purification cycle which has been mechanically dehydrated, in particular using a centrifuge or filter press.

15. Process according to one of the preceding claims, wherein the extracted granular fertilizer (BMR3) has substantially spherical granules with a diameter ≥ 2 mm, preferably between 2 mm and 30 mm.

16. Process according to one of the preceding claims, wherein the extracted granular fertilizer has a percentage of dry substance ≥60%, preferably between 70% and 90%; and/or a quantity of sulphur expressed as SO₃ ≥ 15%, preferably between 20% and 35% by weight of the dry substance; and/or a quantity of calcium expressed as CaO ≥ 15%, preferably between 20% and 30%, by weight of the dry substance; and/or a quantity of organic nitrogen ≥ 0.5% preferably between 0.8% and 2%, by weight of the dry substance; and/or a quantity of organic carbon > 5%, preferably between 10% and 15%, by weight of the dry substance.

17. Process according to one of the preceding claims, wherein the starting biological sludge (BMR0) has a neutral pH, and/or the fluid acid sludge subjected to oxidising treatment has a pH of between 0 and 1, and/or the alkaline mixture (BMR2) entering the rotary reactor has a pH of between 10 and 11, and/or the granular fertilizer (BMR3) extracted from the rotary reactor has a pH greater than 8 and less than or equal to 9.5.

18. Process according to one of the preceding claims, **characterized in that** the thermal energy necessary for dehydration of the mixture comprising hydrolysed organic material and calcium sulphate and for the formation of the granulated dried fertilizer is obtained in a percentage amount greater than or equal to 55%, preferably between 60% and 70%, from exothermic reactions due to the acid conditioning by means of sulphuric acid, to the oxidising treatment by means of hydrogen peroxide solution, to the mixing with calcium oxide in powder form, and optionally to the heat supplied by at least one gaseous stream comprising carbon dioxide.

19. Process according to the preceding claim, wherein the remaining heat necessary for dehydration is provided by means of combustion of conventional fuels, preferably in a burner and/or in an electric generator.

20. Process according to one of the preceding claims, **characterized in that** it is integrated in a purification cycle for purifying civil and/or industrial wastewater inside a purification plant, the purification cycle further comprising:
- feeding of civil and/or industrial wastewater to a purifier;
- purification of the wastewater resulting in a purified liquid and a biomass with a dry substance content of not more than 5% by weight;
- extraction of the biomass and mechanical dehydration of the biomass resulting in the starting biological sludge (BMR0).

21. Process according to one of the preceding claims further comprising one or more of the following steps:
- purifying, of solid particles, gaseous substances output from the rotary reactor (10), by means of a cyclone (15) for eliminating the dusts;
- extraction of the ammonia present in gaseous substances originating from the rotary reactor (10) by means of a scrubber;
- condensation of the steam present in gaseous substances originating from the rotary reactor (10) by means of a condenser;
- feeding of a liquid condensed from gaseous substances originating from the rotary reactor to the front end of a civil and/or industrial wastewater purification plant.

## Patentansprüche

1. Verfahren zur Behandlung eines biologischen Ausgangsschlamms (MBRO) mit einer trockenen Fraktion und einer flüssigen Fraktion, wobei die trockene Fraktion größer als oder gleich 15 Gew.-% des biologischen Ausgangsschlamms ist, umfassend:
- saure Konditionierung des biologischen Ausgangsschlamms (MBRO) durch Mischen mit Schwefelsäure, wodurch ein flüssiger saurer Schlamm mit einer höheren Temperatur und einer niedrigeren Viskosität als der biologische Ausgangsschlamm entsteht;
- oxidierende Behandlung des flüssigen sauren Schlamms durch Mischen mit einer Wasserstoffperoxidlösung;
- Mischen des aus der oxidierenden Behandlung resultierenden flüssigen sauren Schlamms (MBR1) mit Kalziumoxid in Pulverform, wodurch ein alkalisches Gemisch (MBR2) entsteht, das hydrolysiertes organisches Material und Kalziumsulfat enthält;
- Einspeisung des Gemischs (MBR2) enthaltend hydrolysiertes organisches Material und Kalziumsulfat in einen rotierenden Reaktor (10) mit einer Reaktionskammer (100), die sich zwischen einem stromaufwärts gelegenen Einlass zur Zuführung des Gemischs und einem stromabwärts gelegenen Auslass erstreckt, und der außerdem eine stromaufwärts gelegenen Öffnung (11) zur Abgabe gasförmiger Stoffe umfasst;
- Drehen des Rotationsreaktors (10), so dass das Gemisch (MBR2) gemischt und umgewälzt wird und sich vom stromaufwärts gelegenen Einlass zum stromabwärts gelegenen Auslass in der Reaktionskammer (100) bewegt;
wobei während des Drehens des Rotationsreaktors (10) und des Durchgangs des alkalischen Gemischs (MBR2) innerhalb des Reaktors vom stromaufwärts gelegenen Einlass zum stromabwärts gelegenen Auslass eine Temperatur des Gemischs innerhalb der Reaktionskammer (100) 90 °C übersteigt und das Gemisch unter Erzeugung von Dampf und einer Erhöhung des Prozentsatzes der Trockensubstanz des Gemisches auf mehr als 55 % entwässert wird, wobei ein getrocknetes resultierendes Material gebildet wird, das ein körniges Düngemittel (MBR3) in Form von Granulat mit einer Restfeuchtigkeit von weniger als oder gleich 40%, vorzugsweise zwischen 10 % und 30 %, ist, das zur Verwendung als Korrekturmittel für alkalische und/oder salzhaltige landwirtschaftliche Böden geeignet ist;
- Entnahme des körnigen Düngemittels (MBR3) aus dem stromabwärts gelegenen Ausgang des Rotationsreaktors.

2. Verfahren nach Anspruch 1, wobei die Säurekonditionierung in mindestens einem Chargenreaktor (1) und vorzugsweise die oxidierende Behandlung im selben Chargenreaktor (1) durchgeführt wird.

3. Verfahren nach einem der vorhergehenden Ansprüche, wobei die Säurekonditionierung unter Verwendung von konzentrierter Schwefelsäure, vorzugsweise H₂SO₄, mit einer Konzentration von mehr als 90 % durchgeführt wird.

4. Verfahren nach einem der vorhergehenden Ansprüche, wobei zur Säurekonditionierung des Ausgangs-Biorestschlamms eine dem Gesamtgewicht der Trockensubstanz des Ausgangs-Bioschlamms (MBRO) entsprechende Menge an Schwefelsäure, insbesondere konzentrierter Schwefelsäure, zugegeben wird.

5. Verfahren nach einem der vorhergehenden Ansprüche, wobei die Säurekonditionierung des biologischen Ausgangsschlamms eine Erhöhung der Temperatur des biologischen Schlamms um 40-50 °C bewirkt.

6. Verfahren nach einem der vorhergehenden Ansprüche, wobei:
- eine Reaktionszeit für die Säurekonditionierung zwischen 15 und 45 Minuten, vorzugsweise 25-35 Minuten, beträgt; und/oder
- eine Reaktionszeit für die oxidierende Behandlung zwischen 15 und 45 Minuten, vorzugsweise 25-35 Minuten beträgt.

7. Verfahren nach einem der vorhergehenden Ansprüche, wobei: während der sauren Konditionierung ein Gas, das Wasserdampf, SO₂ und H₂S enthält, abgezogen wird; und/oder während der oxidierenden Behandlung ein Gas, das im Wesentlichen nur aus Wasserdampf besteht, abgezogen wird.

8. Verfahren nach einem der vorhergehenden Ansprüche, wobei, während der oxidierenden Behandlung des flüssigen sauren Schlamms, ein Volumen an Wasserstoffperoxidlösung zwischen 10 % und 40 % des Volumens der zuvor eingeführten Schwefelsäure, vorzugsweise zwischen 25 % und 35 % des Volumens, zugeführt wird; und/oder wobei die Wasserstoffperoxidlösung sauerstoffangereichertes Wasser ist, vorzugsweise in der handelsüblichen Konzentration von 35 %.

9. Verfahren nach einem der vorhergehenden Ansprüche, wobei die oxidierende Behandlung des flüssigen sauren Schlamms eine weitere Erhöhung der Temperatur sauren Schlamms bewirkt, wobei die Temperaturerhöhung insbesondere zwischen 5 °C und 10 °C in Bezug auf die während des Säurekonditionierungsschritts erreichte Höchsttemperatur und/oder zwischen 50 °C und 60 °C in Bezug auf die Temperatur des biologischen Ausgangsschlamms (MBRO) beträgt.

10. Verfahren nach einem der vorhergehenden Ansprüche, wobei mindestens ein CO₂ enthaltender Gasstrom und wahlweise mindestens ein aus der Ansäuerungsstufe des Ausgangsschlamms und/oder der Oxidationsbehandlungsstufe gewonnener Gasstrom, der Dampf und wahlweise SO₂ und/oder H₂S enthält, über mindestens einen stromabwärtigen Einlass des Reaktors in die Reaktionskammer (100) des Rotationsreaktors (10) eingespeist wird; wobei sich der mindestens eine Gasstrom während der Drehung des Rotationsreaktors (10) in entgegengesetzter Richtung zur Vorwärtsbewegungsrichtung von stromaufwärts nach stromabwärts des alkalischen Gemischs (BMR2), das hydrolysiertes organisches Material und Calciumsulfat enthält, bewegt.

11. Verfahren nach dem vorhergehenden Anspruch, wobei:
- der mindestens eine CO₂ enthaltende Gasstrom die Abgase eines Brenners und/oder eines elektrischen Generators, insbesondere eines Verbrennungsmotors oder einer Gasturbine, umfasst; und/oder
- der mindestens eine CO₂ enthaltende Gasstrom während des Durchgangs innerhalb des Rotationsreaktors (10) dem Gemisch (BMR2) innerhalb der Reaktionskammer (100) Wärme zuführt, was die Dehydratisierung begünstigt, und den pH-Wert des Gemischs verringert aufgrund einer Reaktion zwischen restlichem Kalziumhydroxid im Gemisch und dem Kohlendioxid des gasförmigen Stroms.

12. Verfahren nach einem der vorhergehenden Ansprüche,
**dadurch gekennzeichnet, dass** der Rotationsreaktor (10) eine Vielzahl von Bewegungsmitteln (111; 121; 131), insbesondere Schaufeln, aufweist, die mit einer Innenfläche der Reaktionskammer (100) integral und dazu bestimmt sind, sich zusammen mit dieser zu drehen, um das die Reaktionskammer durchlaufende Gemisch umzuwälzen; und/oder, dass der Rotationsreaktor (10) mit einer Neigung von stromaufwärts nach stromabwärts geneigt ist, vorzugsweise mit einer Neigung zwischen 2° und 7°.

13. Verfahren nach einem der vorhergehenden Ansprüche,
**dadurch gekennzeichnet, dass** der biologische Ausgangsschlamm (BMR0) einen Prozentsatz an Trockensubstanz von weniger als oder gleich 40 %, vorzugsweise zwischen 20 % und 40 %, aufweist.

14. Verfahren nach einem der vorhergehenden Ansprüche, wobei der Ausgangs-Bioschlamm aus Folgendem besteht oder Folgendes umfasst: einen Restschlamm eines Abwasserreinigungszyklus, eine organische Fraktion von festem Siedlungsabfall (OFSUW), einen Gärrest aus methanogener Fermentation, Abfall tierischen Ursprungs oder eine Kombination davon; wobei vorzugsweise der Ausgangs-Bioschlamm ein Restschlamm eines Abwasserreinigungszyklus ist, der mechanisch entwässert wurde, insbesondere unter Verwendung einer Zentrifuge oder Filterpresse.

15. Verfahren nach einem der vorhergehenden Ansprüche, wobei das extrahierte körnige Düngemittel (BMR3) im Wesentlichen kugelförmige Körner mit einem Durchmesser ≥ 2 mm, vorzugsweise zwischen 2 mm und 30 mm, aufweist.

16. Verfahren nach einem der vorhergehenden Ansprüche, wobei das extrahierte körnige Düngemittel einen Trockensubstanzanteil von ≥ 60 %, vorzugsweise zwischen 70 % und 90 %, und/oder eine Schwefelmenge, ausgedrückt als SO₃ ≥ 15 %, vorzugsweise zwischen 20 % und 35 % des Gewichts der Trockensubstanz; und/oder eine Calciummenge, ausgedrückt als CaO ≥ 15 %, vorzugsweise zwischen 20 % und 30 %, des Gewichts der Trockensubstanz, und/oder eine Menge an organischem Stickstoff ≥ 0,5 %, vorzugsweise zwischen 0,8 % und 2 %, des Gewichts der Trockensubstanz; und/oder eine Menge an organischem Kohlenstoff > 5 %, vorzugsweise zwischen 10 % und 15 %, des Gewichts der Trockensubstanz, aufweist.

17. Verfahren nach einem der vorhergehenden Ansprüche, bei dem der biologische Ausgangsschlamm (BMR0) einen neutralen pH-Wert aufweist und/oder der flüssige saure Schlamm, der einer oxidierenden Behandlung unterzogen wird, einen pH-Wert zwischen 0 und 1 aufweist und/oder das alkalische Gemisch (BMR2), das in den Rotationsreaktor gelangt, einen pH-Wert zwischen 10 und 11 aufweist und/oder das granulierte Düngemittel (BMR3), das aus dem Rotationsreaktor extrahiert ist, einen pH-Wert von mehr als 8 und weniger als oder gleich 9,5 aufweist.

18. Verfahren nach einem der vorhergehenden Ansprüche,
**dadurch gekennzeichnet, dass** die zur Dehydratation der Mischung umfassend hydrolysiertes organisches Material und Calciumsulfat und zur Bildung des granulierten Trockendüngers erforderliche Wärmeenergie zu einem Prozentsatz von größer oder gleich 55 %, vorzugsweise zwischen 60 % und 70 %, aus exothermen Reaktionen aufgrund der Säurekonditionierung mittels Schwefelsäure, der oxidierenden Behandlung mittels Wasserstoffperoxidlösung, der Mischung mit pulverförmigem Calciumoxid und gegebenenfalls der von mindestens einem Kohlendioxid umfassenden Gasstrom gelieferten Wärme gewonnen wird.

19. Verfahren nach dem vorhergehenden Anspruch, wobei die für die Dehydratisierung erforderliche Restwärme bereitgestellt wird durch Verbrennung herkömmlicher Brennstoffe, vorzugsweise in einem Brenner und/oder in elektrischen Generator.

20. Verfahren nach einem der vorhergehenden Ansprüche,
**dadurch gekennzeichnet, dass** es in einen Reinigungszyklus zur Reinigung von kommunalem und/oder industriellem Abwasser innerhalb einer Kläranlage integriert ist, wobei der Reinigungszyklus außerdem umfasst:
- Zuführung von kommunalem und/oder industriellem Abwasser zu einer Reinigungsanlage;
- Reinigung des Abwassers zum Erzielen einer gereinigten Flüssigkeit und einer Biomasse mit einem Trockensubstanzgehalt von höchstens 5 Gew.-%;
- Extraktion der Biomasse und mechanische Entwässerung der Biomasse, wodurch der biologische Ausgangsschlamm (BMR0) entsteht.

21. Verfahren nach einem der vorhergehenden Ansprüche, das zusätzlich einen oder mehrere der folgenden Schritte umfasst:
- Reinigen der aus dem Rotationsreaktor (10) austretenden gasförmigen Substanzen von Feststoffpartikeln mittels eines Zyklons (15) zur Beseitigung des Staubes;
- Extraktion des in den aus dem Rotationsreaktor (10) stammenden gasförmigen Stoffen enthaltenen Ammoniaks mittels eines Wäschers;
- Kondensation des in den aus dem Rotationsreaktor (10) stammenden gasförmigen Stoffen enthaltenen Dampfes mittels eines Kondensators;
- Zuführung einer aus gasförmigen Stoffen kondensierten Flüssigkeit aus dem Rotationsreaktor zum vorderen Ende einer kommunalen und/oder industriellen Abwasserreinigungsanlage.

## Revendications

1. Procédé de traitement d'une boue biologique de départ (MBR0) avec une fraction sèche et une fraction liquide, dans lequel la fraction sèche est supérieure ou égale à 15% en poids de la boue biologique de départ, comprenant:
- un conditionnement acide de la boue biologique de départ (MBR0) par mélange avec de l'acide sulfurique, conduisant à une boue acide fluide avec une température plus élevée et une viscosité plus faible que la boue biologique de départ;
- un traitement oxydant de la boue acide fluide par mélange avec une solution de peroxyde d'hydrogène;
- un mélange de la boue acide fluide (MBR1) résultant du traitement oxydant avec de l'oxyde de calcium sous forme de poudre, conduisant à un mélange alcalin (MBR2) comprenant de la matière organique hydrolysée et du sulfate de calcium;
- une alimentation du mélange (MBR2) comprenant de la matière organique hydrolysée et du sulfate de calcium à l'intérieur d'un réacteur rotatif (10) avec une chambre de réaction (100) s'étendant entre une entrée amont pour l'alimentation du mélange et une sortie aval, comprenant en outre une ouverture amont (11) pour la sortie de substances gazeuses;
- une mise en rotation du réacteur rotatif (10) de manière à ce que le mélange (MBR2) soit mélangé et retourné et se déplace de l'entrée amont vers la sortie aval dans la chambre de réaction (100); dans lequel, pendant la rotation du réacteur rotatif (10) et le déplacement à l'intérieur du réacteur du mélange alcalin (MBR2) depuis l'entrée amont vers la sortie aval, une température du mélange à l'intérieur de la chambre de réaction (100) dépasse 90°C et le mélange est déshydraté avec production de vapeur et une augmentation du pourcentage de matière sèche du mélange à plus de 55 %, formant un matériau résultant séché qui est un engrais granulaire (MBR3) sous forme de granulés avec une humidité résiduelle inférieure ou égale à 40 %, de préférence comprise entre 10 % et 30 %, approprié pour être utilisé comme correcteur pour les sols agricoles alcalins et/ou salins;
- l'extraction de l'engrais granulaire (MBR3) de la sortie aval du réacteur rotatif.

2. Procédé selon la revendication 1, dans lequel le conditionnement acide est effectué à l'intérieur d'au moins un réacteur discontinu (1) et de préférence le traitement oxydant est effectué dans le même réacteur discontinu (1).

3. Procédé selon l'une des revendications précédentes, dans lequel le conditionnement acide est réalisé à l'aide d'acide sulfurique concentré, de préférence H₂SO₄ avec une concentration supérieure à 90%.

4. Procédé selon l'une des revendications précédentes, dans lequel on ajoute pour le conditionnement acide de la boue biologique résiduelle de départ une quantité d'acide sulfurique, notamment d'acide sulfurique concentré, égale au poids total de la matière sèche de la boue biologique de départ (MBR0).

5. Procédé selon l'une des revendications précédentes, dans lequel le conditionnement acide de la boue biologique de départ provoque un accroissement de la température de la boue biologique compris entre 40-50°C.

6. Procédé selon l'une des revendications précédentes, dans lequel:
- un temps de réaction pour le conditionnement acide est compris entre 15 et 45 minutes, de préférence 25-35 minutes; et/ou
- un temps de réaction pour le traitement oxydant est compris entre 15 et 45 minutes, de préférence 25-35 minutes.

7. Procédé selon l'une des revendications précédentes, dans lequel: lors du conditionnement acide, un gaz comprenant de la vapeur d'eau, du SO₂ et du H₂S est extrait; et/ou lors du traitement oxydant, un gaz essentiellement constitué uniquement de vapeur d'eau estextrait.

8. Procédé selon l'une des revendications précédentes, dans lequel, lors du traitement oxydant de la boue acide fluide, on introduit un volume de solution de peroxyde d'hydrogène compris entre 10% et 40% du volume de l'acide sulfurique précédemment introduit, de préférence entre 25% et 35% en volume; et/ou dans lequel la solution de peroxyde d'hydrogène est de l'eau oxygénée, de préférence à la concentration commerciale de 35%.

9. Procédé selon l'une des revendications précédentes, dans lequel le traitement oxydant de la boue acide fluide provoque un nouvel accroissement de la température de la boue acide; l'accroissement en température étant notamment compris entre 5° et 10°C par rapport à la température maximale atteinte lors de l'étape de conditionnement acide et/ou entre 50° et 60°C par rapport à la température de la boue biologique de départ (MBR0).

10. Procédé selon l'une des revendications précédentes, dans lequel au moins un flux gazeux contenant du CO₂, et éventuellement au moins un flux gazeux extrait de l'étape d'acidification de la boue de départ et/ou de l'étape de traitement oxydant et comprenant de la vapeur d'eau et éventuellement du SO₂ et/ou du H₂S, est introduit, via au moins une entrée aval du réacteur, dans la chambre de réaction (100) du réacteur rotatif (10); le au moins un flux gazeux se déplaçant dans le sens inverse du sens d'avancement de l'amont vers l'aval du mélange alcalin (BMR2) comprenant de la matière organique hydrolysée et du sulfate de calcium, lors de la rotation du réacteur rotatif (10).

11. Procédé selon la revendication précédente, dans lequel:
- le au moins un flux gazeux comprenant du CO₂ comprend des gaz d'échappement d'un brûleur et/ou d'un générateur électrique, notamment actionné par un moteur à combustion ou une turbine à gaz; et/ou
- lors du déplacement à l'intérieur du réacteur rotatif (10) le au moins un flux gazeux contenant du CO₂ apporte de la chaleur au mélange (BMR2) à l'intérieur de la chambre de réaction (100), favorisant la déshydratation, et réduit le pH du mélange grâce à une réaction entre l'hydroxyde de calcium résiduel dans le mélange et le dioxyde de carbone du flux gazeux.

12. Procédé selon l'une des revendications précédentes, **caractérisé en ce que** le réacteur rotatif (10) comporte une pluralité de moyens de déplacement (111;121;131), notamment des aubes, solidaires d'une surface intérieure de la chambre de réaction (100) et conçus pour tourner solidairement avec celle-ci afin de faire tourner le mélange en déplacement à l'intérieur de la chambre de réaction; et/ou **en ce que** le réacteur rotatif (10) est incliné avec une pente d'amont en aval, de préférence avec une pente comprise entre 2° et 7°.

13. Procédé selon l'une des revendications précédentes, **caractérisé en ce que** la boue biologique de départ (BMR0) présente un pourcentage de matière sèche inférieur ou égal à 40%, de préférence compris entre 20% et 40%.

14. Procédé selon l'une des revendications précédentes, dans lequel la boue biologique de départ est constituée de ou comprend: une boue résiduaire d'un cycle d'épuration des eaux usées, une fraction organique des déchets urbains solides (OFSUW), un digestat de fermentation méthanogène, des déchets d'origine animale, ou une combinaison de ceux-ci; dans lequel, de préférence, la boue biologique de départ est une boue résiduaire d'un cycle d'épuration des eaux usées qui a été déshydratée mécaniquement, notamment à l'aide d'une centrifugeuse ou d'un filtre-presse.

15. Procédé selon l'une des revendications précédentes, dans lequel l'engrais granulaire extrait (BMR3) présente des granulés sensiblement sphériques de diamètre ≥ 2 mm, de préférence compris entre 2 mm et 30 mm.

16. Procédé selon l'une des revendications précédentes, dans lequel l'engrais granulaire extrait présente un pourcentage de matière sèche ≥ 60%, de préférence compris entre 70% et 90%; et/ou une quantité de soufre exprimée en SO₃ ≥ 15%, de préférence comprise entre 20% et 35% en poids de la matière sèche; et/ou une quantité de calcium exprimée en CaO ≥ 15%, de préférence comprise entre 20% et 30%, en poids de la matière sèche; et/ou une quantité d'azote organique ≥ 0,5%, de préférence comprise entre 0,8% et 2%, en poids de la matière sèche; et/ou une quantité de carbone organique >5%, de préférence comprise entre 10% et 15%, en poids de la matière sèche.

17. Procédé selon l'une des revendications précédentes, dans lequel la boue biologique de départ (BMR0) a un pH neutre, et/ou la boue acide fluide soumise au traitement oxydant a un pH compris entre 0 et 1, et/ou le mélange alcalin (BMR2) entrant dans le réacteur rotatif a un pH compris entre 10 et 11, et/ou l'engrais granulaire (BMR3) extrait du réacteur rotatif a un pH supérieur à 8 et inférieur ou égal à 9,5.

18. Procédé selon l'une des revendications précédentes, **caractérisé en ce que** l'énergie thermique nécessaire à la déshydratation du mélange comprenant la matière organique hydrolysée et le sulfate de calcium et à la formation de l'engrais séché granulé est obtenue en un pourcentage supérieur ou égal à 55 %, de préférence compris entre 60 % et 70 %, à partir de réactions exothermiques dues au conditionnement acide au moyen d'acide sulfurique, au traitement oxydant au moyen d'une solution de peroxyde d'hydrogène, au mélange avec de l'oxyde de calcium sous forme de poudre, et éventuellement à la chaleur apportée par au moins un flux gazeux comprenant du dioxyde de carbone.

19. Procédé selon la revendication précédente, dans lequel la chaleur restante nécessaire à la déshydratation est fournie au moyen de combustion de combustibles classiques, de préférence dans un brûleur et/ou dans un générateur électrique.

20. Procédé selon l'une des revendications précédentes, **caractérisé en ce qu'**il est intégré dans un cycle d'épuration d'eaux usées civiles et/ou industrielles au sein d'une station d'épuration, le cycle d'épuration comprenant en outre:
- une alimentation d'eaux usées civiles et/ou industrielles vers un épurateur;
- une épuration des eaux usées donnant lieu à un liquide épuré et à une biomasse dont la teneur en matière sèche ne dépasse pas 5 % en poids;
- une extraction de la biomasse et déshydratation mécanique de la biomasse conduisant à la boue biologique de départ (BMR0).

21. Procédé selon l'une des revendications précédentes comprenant en outre une ou plusieurs des étapes suivantes:
- une purification, de particules solides, de substances gazeuses sortant du réacteur rotatif (10), au moyen d'un cyclone (15) pour éliminer les poussières;
- une extraction de l'ammoniac présent dans les substances gazeuses provenant du réacteur rotatif (10) au moyen d'un épurateur;
- une condensation de la vapeur d'eau présente dans les substances gazeuses provenant du réacteur rotatif (10) au moyen d'un condenseur;
- une alimentation d'un liquide condensé à partir de substances gazeuses provenant du réacteur rotatif vers l'extrémité avant d'une station d'épuration d'eaux usées civiles et/ou industrielles.
